# EUROPÄISCHE PATENTANMELDUNG

(11) **EP 2 031 099 A1**
(43) Veröffentlichungstag der Anmeldung: **04.03.2009**
(21) Anmeldenummer: 07405239.0
(22) Anmeldetag: 15.08.2007
(51) Int. Cl.: C25D 11/18, C25D 11/24, A01N 59/06, A01N 59/16, A01N 59/20, A61L 31/12

(54) **Verfahren zur Herstellung eines Gegenstandes mit aseptischer Oberfläche**

(71) Anmelder: Alcan Technology & Management Ltd., 8212 Neuhausen am Rheinfall (CH)
(72) Erfinder: Pippig Schmid, Kristin, 9000 St. Gallen (CH)

(57) **Zusammenfassung**

Bei einem Verfahren zur Herstellung eines Gegenstandes mit aseptischer Oberfläche wird auf einem Gegenstand aus Aluminium oder einer Aluminiumlegierung durch Anodisation eine poröse Oxidschicht erzeugt und nachfolgend aus einem wenigstens ein Salz eines Metalls mit antimikrobieller Wirkung enthaltenden Elektrolyten auf elektrochemischem Weg Metall mit antimikrobieller Wirkung in die Poren der Oxidschicht eingelagert. Der Gegenstand mit der mit Metall mit antimikrobieller Wirkung gefüllten Oxidschicht wird anschliessend in eine Beizlösung eingetaucht und die Oxidschicht an ihrer Oberfläche gleichmässig partiell abgetragen.

## Beschreibung

Die Erfindung betrifft ein Verfahren zur Herstellung eines Gegenstandes mit aseptischer Oberfläche, bei welchem Verfahren auf einem Gegenstand aus Aluminium oder einer Aluminiumlegierung durch Anodisation eine poröse Oxidschicht erzeugt und nachfolgend aus einem wenigstens ein Salz eines Metalls mit antimikrobieller Wirkung enthaltenden Elektrolyten auf elektrochemischem Weg Metall mit antimikrobieller Wirkung in die Poren der Oxidschicht eingelagert wird.

In Bereichen erhöhter Kontaminationsgefahr mit Krankheitserregern, insbesondere im medizinischen Bereich, wie z. B. in Spitälern und Arztpraxen, sowie im Bereich des öffentlichen Verkehrs sind insbesondere Bauteile, die mit den Händen häufig berührt werden, wie z. B. Teile von Bettgestellen und anderen Ausrüstungsgegenständen im medizinischen Bereich, Handgriffe, Türgriffe, Haltestangen, etc. aus poliertem Edelstahl gefertigt. Zur Dekontamination dieser Gegenstände werden entsprechende, häufig die Umwelt belastende Reinigungsmittel eingesetzt.

Aus EP-A-1 207 220 und US-A-6 168 869 ist es bekannt, Gegenstände aus Aluminium oder einer Aluminiumlegierung zu Anodisieren und Metalle mit antimikrobieller Wirkung, wie z. B. Silber, Kupfer oder Zink, in die Poren von anodisch erzeugten Oxidschicht einzulagern.

Weiter ist es beispielsweise aus US-A-4 414 077 zum Färben von Aluminiumoberflächen bekannt, in einem ersten Elektrolyten durch Anodisation eine poröse Oxidschicht zu erzeugen und in einem zweiten, metallsalzhaltigen Elektrolyten auf elektrochemischem Weg Metalle in den Poren der Oxidschicht abzuscheiden.

Der Erfindung liegt die Aufgabe zugrunde, ein Verfahren der eingangs genannten Art zu schaffen, mit welchem die antimikrobielle Wirkung der in die Poren der Oxidschicht eingelagerten Metalle weiter verbessert werden kann.

Zur erfindungsgemässen Lösung der Aufgabe führt, dass der Gegenstand mit der mit Metall mit antimikrobieller Wirkung gefüllten Oxidschicht in eine Beizlösung eingetaucht und die Oxidschicht an ihrer Oberfläche gleichmässig partiell abgetragen wird.

Als Metalle mit antimikrobieller Wirkung wird insbesondere Silber bevorzugt eingesetzt. Neben Silber weisen aber auch Kupfer, Zink oder eine Mischung der genannten Metalle eine antimikrobielle Wirkung auf.

Durch die Beizbehandlung wird die Oxidschicht an der Oberfläche angegriffen. Dabei soll nur ein geringer Teil der Oberfläche gleichmässig abgetragen werden. Das in den Poren der Oxidschicht eingelagerte Metall wird durch diesen Prozess nicht beeinträchtigt und ragt nach dem Beizen nadelartig aus der Oberfläche heraus. Die aseptische Wirkung wird dadurch verstärkt.

Bevorzugt wird die Oxidschicht gleichmässig um einen Betrag zwischen etwa 0,01 µm und maximal etwa 1 µm abgetragen.

Je nach Einsatzgebiet des Gegenstandes wird die Anodisation der Oxidschicht in einem Schwefelsäure-Elektrolyten zu einer Oxidschichtdicke von 5 bis 25 µm oder in einem Schwefelsäure/Oxalsäure-Elektrolyten zu einer Oxidschichtdicke von 15 bis 70 µm durchgeführt.

Das partielle Abtragen der Oxidschicht kann in einer alkalische Beizlösung, beispielsweise in einer wässrigen Lösung von Natronlauge oder Natriumcarbonat, oder in einer sauren Beizlösung, z. B. in einer wässrigen Lösung von Salpetersäure, oder in einer sauren Mischbeizlösung, beispielsweise in einer wässrigen Lösung von Schwefelsäure und Flusssäure, durchgeführt werden.

Ein bevorzugter Anwendungsbereich der mit dem erfindungsgemässen Verfahren hergestellten Gegenstände liegt in deren Verwendung als Bauteile von Einrichtungen im Bereichen erhöhter Kontaminationsgefahr mit Krankheitserregern, insbesondere im medizinischen Bereich, wie z. B. in Spitälern und Arztpraxen, sowie im Bereich des öffentlichen Verkehrs.

Nachfolgend ist ein Ablauf des erfindungsgemässen Verfahrens zur Herstellung von Gegenständen mit aseptischer Oberfläche beispielhaft dargestellt.

Vor dem Anodisieren werden die Gegenstände nach herkömmlichen Verfahren entfettet, gebeizt und dekapiert. Die Entfettung erfolgt z. B. mit einem alkalischen Reiniger, enthaltend Borate, Carbonate, Phosphate und nichtionische Tenside bei einer Temperatur von 50-70 °C und einer Tauchzeit von 10-20 Minuten. Das Beizen erfolgt z. B. in einem Natronlauge, Alkohole und Salze anorganischer Säuren enthaltenden Beizmittel bei einer Temperatur von 30-50 °C und einer Tauchzeit von 0,5-10 Minuten. Das Dekapieren erfolgt z. B. mit einem sauren, Salze anorganischer Säuren sowie anorganische Säuren enthaltenden Dekapiermittel bei einer Temperatur von etwa 20 °C und einer Tauchzeit von 5-10 Minuten. Nach jedem Verfahrensschritt werden die Gegenstände mit entionisiertem Wasser gründlich gespült.

Das nachfolgende Anodisieren erfolgt für Oxidschichtdicken von 5-25 µm z. B. nach dem Gleichstrom-Schwefelsäure-Verfahren in einem Elektrolyten mit 100-200 g/L Schwefelsäure bei einer Temperatur von 18-25 °C mit einer Stromdichte von 1.0-2.5 A/dm².

Für Oxidschichtdicken von 15-70 µm erfolgt das Anodisieren z. B. in einem Schwefelsäure/Oxalsäure-Elektrolyten mit 100-200 g/L Schwefelsäure und 5-20 g/L Oxalsäure bei einer Temperatur von 0-20 °C mit einer Stromdichte von 1.5-4 A/dm².

Nach erneutem gründlichen Spülen mit entionisiertem Wasser erfolgt die elektrolytische Einlagerung von Silber über die gesamte Porentiefe der anodischen Oxidschicht.

Die Gegenstände mit dem in den Poren der anodischen Oxidschicht eingelagerten Silber werden erneut mit entionisiertem Wasser gründlich gespült und anschliessend in eine Beizlösung eingetaucht, um die Oxidschicht an ihrer Oberfläche gleichmässig partiell abzutragen.

Nachfolgend sind mögliche Beizlösungen mit entsprechenden Badtemperaturen und Beizzeiten zusammengestellt.
a) Alkalische Beizlösung
   10-100 g/L Natronlauge
   0-100 g/L Aluminium
   Badtemperatur: 50-70°C
   Beizzeit: 1 sec bis 10 min
b) Alkalische Beizlösung
   10-50g/L Natriumcarbonat
   Badtemperatur: 50-80 °C
   Beizzeit: 10 sec bis 10 min
c) Saure Beizlösung
   10-200 g/L Salpetersäure
   Badtemperatur: 20-80°C
   Beizzeit: 1-10 min
d) Saure Mischbeizlösung
   10-50 g/L Schwefelsäure + 1-10g/L Flusssäure
   Badtemperatur: 20-40°C
   Beizzeit: 1-10 min

## Patentansprüche

1. Verfahren zur Herstellung eines Gegenstandes mit aseptischer Oberfläche, bei welchem Verfahren auf einem Gegenstand aus Aluminium oder einer Aluminiumlegierung durch Anodisation eine poröse Oxidschicht erzeugt und nachfolgend aus einem wenigstens ein Salz eines Metalls mit antimikrobieller Wirkung enthaltenden Elektrolyten auf elektrochemischem Weg Metall mit antimikrobieller Wirkung in die Poren der Oxidschicht eingelagert wird,
**dadurch gekennzeichnet, dass**
der Gegenstand mit der mit Metall mit antimikrobieller Wirkung gefüllten Oxidschicht in eine Beizlösung eingetaucht und die Oxidschicht an ihrer Oberfläche gleichmässig partiell abgetragen wird.

2. Verfahren nach Anspruch 1, **dadurch gekennzeichnet, dass** das Metall mit antimikrobieller Wirkung aus Silber, Kupfer, Zink oder einer Mischung der dieser Metalle besteht.

3. Verfahren nach Anspruch 1 oder 2, **dadurch gekennzeichnet, dass** die Oxidschicht um einen Betrag zwischen 0,01 und 1 µm abgetragen wird.

4. Verfahren nach einem der Ansprüche 1 bis 3, **dadurch gekennzeichnet, dass** die Anodisation der Oxidschicht in einem Schwefelsäure-Elektrolyten zu einer Oxidschichtdicke von 5 bis 25 µm durchgeführt wird.

5. Verfahren nach einem der Ansprüche 1 bis 3, **dadurch gekennzeichnet, dass** die Anodisation der Oxidschicht in einem Schwefelsäure/Oxalsäure-Elektrolyten zu einer Oxidschichtdicke von 15 bis 70 µm durchgeführt wird.

6. Verfahren nach einem der Ansprüche 1 bis 5, **dadurch gekennzeichnet, dass** das partielle Abtragen der Oxidschicht in einer alkalische Beizlösung, vorzugsweise in einer wässrigen Lösung von Natronlauge oder Natriumcarbonat, durchgeführt wird.

7. Verfahren nach einem der Ansprüche 1 bis 5, **dadurch gekennzeichnet, dass** das partielle Abtragen der Oxidschicht in einer sauren Beizlösung, vorzugsweise in einer wässrigen Lösung von Salpetersäure, durchgeführt wird.

8. Verfahren nach einem der Ansprüche 1 bis 5, **dadurch gekennzeichnet, dass** das partielle Abtragen der Oxidschicht in einer sauren Mischbeizlösung, vorzugsweise in einer wässrigen Lösung von Schwefelsäure und Flusssäure, durchgeführt wird.

9. Verwendung eines mit dem Verfahren nach einem der vorangehenden Ansprüche hergestellten Gegenstandes als Bauteil von Einrichtungen in Bereichen erhöhter Kontaminationsgefahr mit Krankheitserregern, insbesondere im medizinischen Bereich, wie z. B. in Spitälern und Arztpraxen sowie im Bereich des öffentlichen Verkehrs.
